# EUROPÄISCHE PATENTANMELDUNG

(11) **EP 4 631 750 A1**
(43) Veröffentlichungstag der Anmeldung: **15.10.2025**
(21) Anmeldenummer: 25167965.0
(22) Anmeldetag: 02.04.2025
(51) Int. Cl.: B60D 1/02, A01B 59/00, B60D 1/24, B60D 1/58

(54) **SPIELBEGRENZUNG-DISTANZSCHEIBE**

(30) Priorität: 10.04.2024 AT 503042024
(71) Anmelder: Scharmüller, Christine, 4892 Fornach (AT)
(72) Erfinder: Scharmüller, Christine, 4892 Fornach (AT)
(74) Vertreter: Gibler & Poth Patentanwälte KG

(57) **Zusammenfassung**

Es wird eine Spielbegrenzung-Distanzscheibe (1) für eine Anhängerkupplung (2), umfassend ein Loch (3) zur Aufnahme eines Kupplungsbolzens (4) und eine Haltevorrichtung (5) zum Halten an einer Kugelgelenkzugöse (6) vorgeschlagen.

## Beschreibung

Die Erfindung betrifft eine Spielbegrenzung-Distanzscheibe gemäß dem Oberbegriff des Patentanspruches 1.

Es ist bekannt, dass Anhänger oder Arbeitsgeräte für Land- und forstwirtschaftliche Fahrzeuge mittels einer Anhängerkupplung an einer Zugmaschine, wie beispielsweise einem Traktor, angehängt und mit der Zugmaschine gezogen werden. Derartige Anhängerkupplungen sind dazu ausgelegt mit der Zugmaschine etliche Tonnen Anhängelast zu ziehen, wobei aufgrund des Gewichts des Anhängers oder des Arbeitsgeräts oftmals bereits das Kuppeln des Anhängers oder Arbeitsgeräts mit der Zugmaschine eine aufwendige Angelegenheit ist. Daher ist es nicht unüblich, dass der Anhänger oder das Arbeitsgerät über eine etliche Zeit an der Zugmaschine angehängt bleibt, wenn die Zugmaschine nicht zwischenzeitlich anderweitig benötigt wird.

Durch die hohe Anhängelast an der Zugmaschine ist die Anhängerkupplung weiters einem hohen Verschleiß ausgesetzt, welcher durch Schwenkbewegungen des Anhängers, beispielsweise bei Durchfahrten durch Gräben oder durch Fahrten auf unbefestigten Straßen, zusätzlich erhöht wird. Dadurch müssen Anhängerkupplungen an Land- und forstwirtschaftlichen Fahrzeugen auch oft ersetzt werden.

Aufgabe der Erfindung ist es daher eine Spielbegrenzung-Distanzscheibe der eingangs genannten Art anzugeben, mit welcher die genannten Nachteile vermieden werden können, mit welcher der Verschleiß an einer Anhängerkupplung für Land- und forstwirtschaftliche Fahrzeuge reduziert werden kann.

Erfindungsgemäß wird dies durch die Merkmale des Patentanspruches 1 erreicht.

Dadurch ergibt sich der Vorteil, dass die Spielbegrenzung-Distanzscheibe einfach an einer Kugelgelenkzugöse derart angeordnet werden kann, dass die Spielbegrenzung-Distanzscheibe ohne zusätzliche Befestigungsmittel, also lediglich mit der Haltevorrichtung, an der Kugelgelenkzugöse hält. Dadurch wird das Kuppeln der Kugelgelenkzugöse mit einem Zugmaul nicht zusätzlich erschwert, da lediglich zu Beginn des Kupplungsvorganges die Spielbegrenzung-Distanzscheibe an der Kugelgelenkzugöse angeordnet werden muss und danach die Kugelgelenkzugöse in das Zugmaul eingebracht werden muss. Dabei wird keine Hand zur Stabilisierung der Spielbegrenzung-Distanzscheibe beim Kupplungsvorgang an der Kugelgelenkzugöse benötigt, weil die Spielbegrenzung-Distanzscheibe durch die Haltevorrichtung in Position gehalten wird. Weiters wird durch die Spielbegrenzung-Distanzscheibe der Höhenschlag, also im gekuppelten Zustand einer Anhängerkupplung der freie Bereich zwischen Kugelgelenkzugöse und Zugmaul, reduziert, wodurch der Verschleiß an der Anhängerkupplung, und insbesondere an der Zugöse, deutlich reduziert wird. Dabei kann trotz Verringerung des Höhenschlages durch die Spielbegrenzung-Distanzscheibe der in Normen vorgeschriebene mögliche vertikale Mindestschwenkbereich einfach und kostengünstig sichergestellt werden.

Die Erfindung betrifft weiters eine Kugelgelenkzugöse gemäß dem Patentanspruch 4.

Die Erfindung betrifft weiters eine Anhängerkupplung gemäß dem Patentanspruch 7.

Die Unteransprüche betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste bevorzugte Ausführungsform einer Anhängerkupplung in Explosivdarstellung,
Fig.2 die in Fig. 1 gezeigte bevorzugte Ausführungsform der Anhängerkupplung in einem gekuppelten Zustand in axonometrischer Ansicht,
Fig. 3 einen Längsschnitt der in Fig. 1 gezeigten bevorzugten Ausführungsform der Anhängerkupplung,
Fig. 4 einen Längsschnitt der ersten bevorzugten Ausführungsform der Anhängerkupplung in einer ersten Schwenkendlage,
Fig. 5 einen Längsschnitt einer zweiten bevorzugten Ausführungsform einer Anhängerkupplung in einer zweiten Schwenkendlage,
Fig. 6 ein Detail aus Fig. 5,
Fig. 7 eine bevorzugte Ausführungsform einer Spielbegrenzung-Distanzscheibe in Draufsicht,
Fig. 8 eine weitere bevorzugte Ausführungsform der Spielbegrenzung-Distanzscheibe in axonometrischer Ansicht.

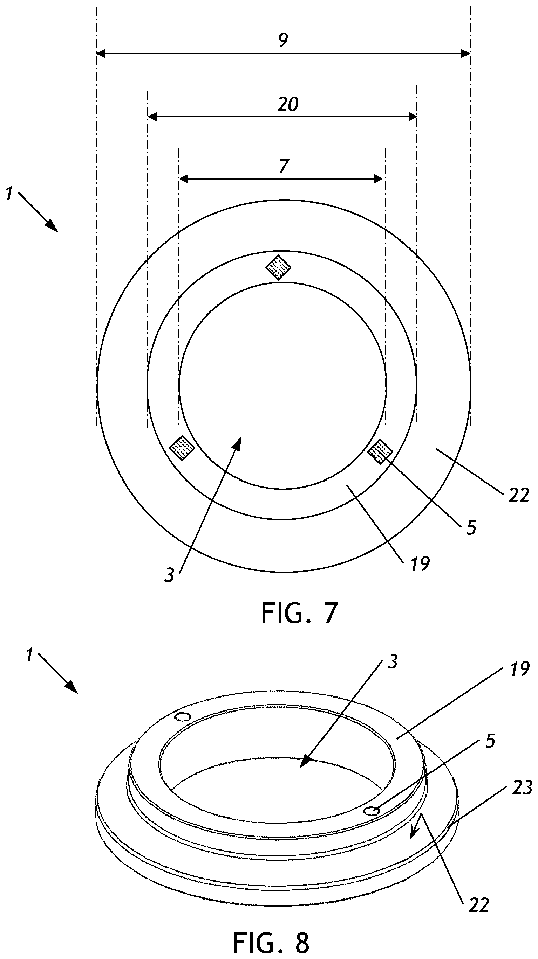

Die Fig. 7 und 8 zeigen zumindest Teile bevorzugter Ausführungsformen einer Spielbegrenzung-Distanzscheibe 1 für eine Anhängerkupplung 2, umfassend ein Loch 3 zur Aufnahme eines Kupplungsbolzens 4 und eine Haltevorrichtung 5 zum Halten an einer Kugelgelenkzugöse 6.

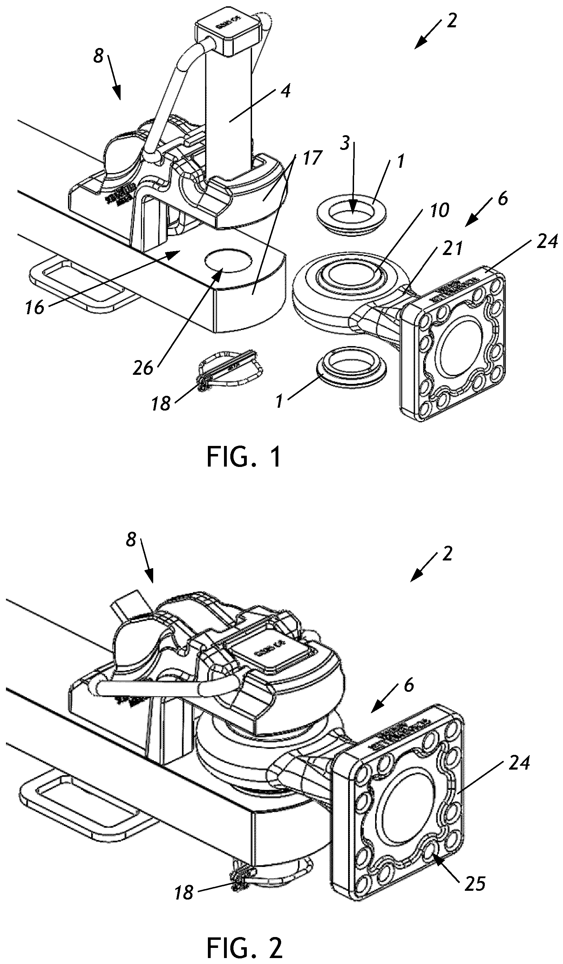

Weiters ist eine Kugelgelenkzugöse 6 mit wenigstens einer erfindungsgemäßen Spielbegrenzung-Distanzscheibe 1 vorgesehen, wobei der Durchmesser des Lochs 7 der wenigstens einen Spielbegrenzung-Distanzscheibe 1 mindestens dem Durchmesser des Lochs der Kugelgelenkzugöse 6 entspricht, wobei das Loch 7 der wenigstens einen Spielbegrenzung-Distanzscheibe 1 und das Loch der Kugelgelenkzugöse 6 - bei Befestigung der Spielbegrenzung-Distanzscheibe 1 an der Kugelgelenkzugöse 6 - ein gemeinsames Durchgangsloch ausbilden. In den Fig. 1 bis 6 ist die Kugelgelenkzugöse 6 beispielhaft gezeigt.

Weiters zeigen die Fig. 1 bis 5 zumindest Teile bevorzugter Ausführungsformen einer Anhängerkupplung 2 umfassend ein Zugmaul 8, einen Kupplungsbolzen 4 und eine erfindungsgemäße Kugelgelenkzugöse 6, wobei die Kugelgelenkzugöse 6 mit dem Zugmaul 8 mittels des Kupplungsbolzens 4 gekuppelt ist, wobei der Kupplungsbolzen 4 in dem gemeinsamen Durchgangsloch angeordnet ist.

Dadurch ergibt sich der Vorteil, dass die Spielbegrenzung-Distanzscheibe 1 einfach an einer Kugelgelenkzugöse 6 derart angeordnet werden kann, dass die Spielbegrenzung-Distanzscheibe 1 ohne zusätzliche Befestigungsmittel, also lediglich mit der Haltevorrichtung 5, an der Kugelgelenkzugöse 6 hält. Dadurch wird das Kuppeln der Kugelgelenkzugöse 6 mit einem Zugmaul 8 nicht zusätzlich erschwert, da lediglich zu Beginn des Kupplungsvorgang die Spielbegrenzung-Distanzscheibe 1 an der Kugelgelenkzugöse 6 angeordnet werden muss und danach die Kugelgelenkzugöse 6 in das Zugmaul 8 eingebracht werden muss. Dabei wird keine Hand zur Stabilisierung der Spielbegrenzung-Distanzscheibe 1 beim Kupplungsvorgang an der Kugelgelenkzugöse 6 benötigt, weil die Spielbegrenzung-Distanzscheibe 1 durch die Haltevorrichtung 5 in Position gehalten wird. Weiters wird durch die Spielbegrenzung-Distanzscheibe 1 der Höhenschlag, also im gekuppelten Zustand einer Anhängerkupplung 2 der freie Bereich zwischen Kugelgelenkzugöse 6 und Zugmaul 8, reduziert, wodurch der Verschleiß an der Anhängerkupplung 2, und insbesondere an der Zugöse, deutlich reduziert wird. Dabei kann trotz Verringerung des Höhenschlages durch die Spielbegrenzung-Distanzscheibe 1 der in Normen vorgeschriebene mögliche vertikale Mindestschwenkbereich einfach und kostengünstig sichergestellt werden.

Die Anhängerkupplung 2 ist bevorzugt eine Anhängerkupplung für Land- und forstwirtschaftliche Fahrzeuge. Die Anhängerkupplung 2 ist dazu ausgelegt etliche Tonnen Anhängelast, insbesondere mindestens zwei Tonnen Anhängelast, vorzugsweise mindestens vier Tonnen Anhängelast, ziehen zu können.

Die Spielbegrenzung-Distanzscheibe 1 ist eine Distanzscheibe, also eine Scheibe mit einem Loch 3, insbesondere einem gestanzten oder gebohrten Loch. Bevorzugte Ausführungsformen der Spielbegrenzung-Distanzscheibe 1 sind in den Fig. 7 und 8 gezeigt, wobei Fig. 7 eine Draufsicht und Fig. 8 eine axonometrische Ansicht jeweils einer bevorzugten Ausführungsform der Spielbegrenzung-Distanzscheibe 1 zeigen. Die Spielbegrenzung-Distanzscheibe 1 ist dazu geeignet zwischen einer Kugelgelenkzugöse 6 und einem Zugmaul 8 einer Anhängerkupplung 2, insbesondere für Land- und forstwirtschaftliche Fahrzeuge, angeordnet zu werden.

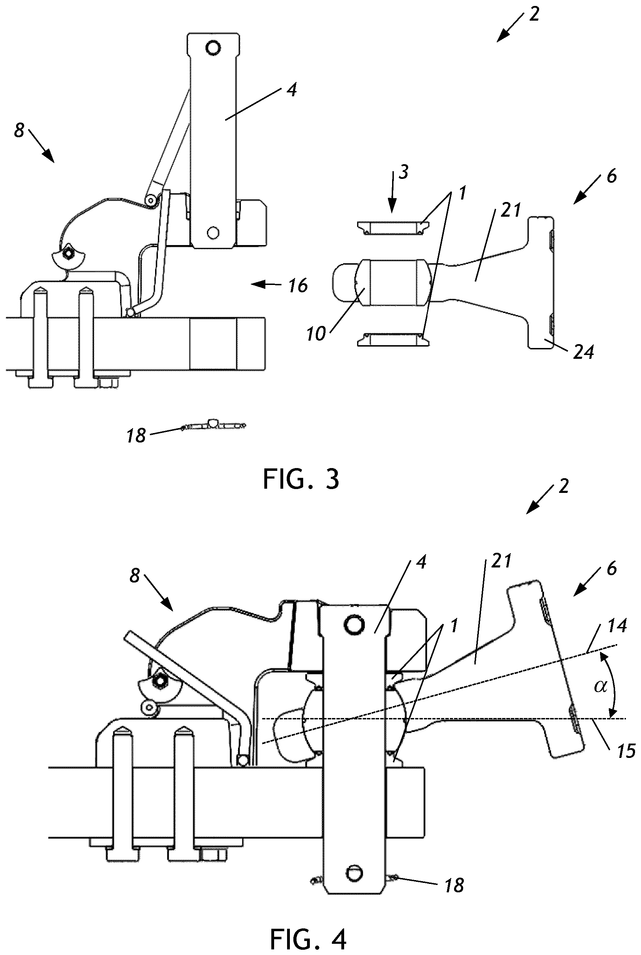

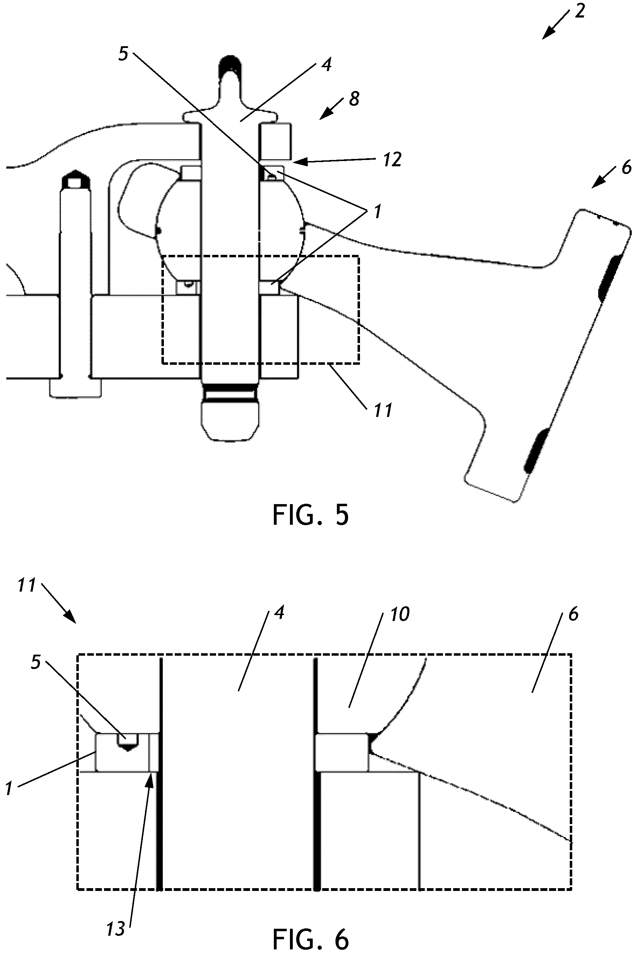

Die Spielbegrenzung-Distanzscheibe 1 ist insbesondere zur Spielbegrenzung einer mit einem Zugmaul 8 gekuppelten Kugelgelenkzugöse 6 geeignet. Das Spiel 12 einer die Spielbegrenzung-Distanzscheibe 1 aufweisenden Anhängerkupplung 2 ist der Bewegungsfreiraum der Kugelgelenkzugöse 6 innerhalb des Zugmauls 8 der Anhängerkupplung 2, wenn die Spielbegrenzung-Distanzscheibe 1 an der Kugelgelenkzugöse 6 gehalten ist, also der Abstand zwischen der Spielbegrenzung-Distanzscheibe 1 und einer Innenwand des Zugmauls 8. Das Spiel 12 ist daher das vertikale Spiel und ist beispielhaft in Fig. 5 gezeigt. Auch, wenn das Spiel 12 lediglich in der in Fig. 5 gezeigten bevorzugten Ausführungsform der Anhängerkupplung 2 gezeigt ist, kann der Fig. 4 entnommen werden, dass ein Spiel 12 durch die Spielbegrenzung-Distanzscheiben 1 begrenzt wird. Weiters ist das Spiel 12 auch als Höhenschlag bekannt, also als den Schlag, den die Kugelgelenkzugöse 6 gegen das Zugmaul 8 aufgrund Ihres Bewegungsspielraums ausführen kann.

Besonders bevorzugt kann vorgesehen sein, dass die Spielbegrenzung-Distanzscheibe 1 umfassend Metall ausgebildet ist. Dadurch kann die Spielbegrenzung-Distanzscheibe 1 besonders einfach haltbar ausgebildet werden.

Bevorzugt kann die Spielbegrenzung-Distanzscheibe 1 umfassend Kunststoff ausgebildet sein. Hierbei sind der Fachperson geeignete Kunststoffe bekannt, welche die Anforderungen an die erfindungsgemäßen Belastungen erfüllen, sodass auf eine Aufzählung von geeigneten Kunststoffen verzichtet wird.

Bevorzugt kann die Haltevorrichtung 5 eine mechanische Halterung sein. Dabei sind verschiedene Ausführungsformen für die Haltevorrichtung 5 möglich, welche ein Halten der Spielbegrenzung-Distanzscheibe 1 an der Kugelgelenkzugöse 6 ermöglichen, weshalb nachfolgend lediglich ein paar bevorzugte Beispiele genannt sind.

Bevorzugt kann die Haltevorrichtung 5 wenigstens ein Band und ein Verschlussteil, insbesondere wie bei einem Kabelbinder, umfassen. Bevorzugt kann das Band um die Kugelgelenkzugöse 6 bindbar und mit dem Verschlussteil fixierbar sein, sodass eine Schlaufe ausbildet wird, welche die Spielbegrenzung-Distanzscheibe 1 an der Kugelgelenkzugöse 6 hält.

Bevorzugt kann Haltevorrichtung 5 Vertiefungen und/oder Fortsätze aufweisen, welche mit gegengleichen Fortsätzen oder Vertiefungen an der Kugelgelenkzugöse 6 formschlüssig verbindbar sind, um die Spielbegrenzung-Distanzscheibe 1 an der Kugelgelenkzugöse 6 zu halten. Dadurch kann die Spielbegrenzung-Distanzscheibe 1 mit einer Art Zapfenverbindung an der Kugelgelenkzugöse 6 gehalten werden.

Besonders bevorzugt kann vorgesehen sein, dass die Haltevorrichtung 5 wenigstens einen Magneten, insbesondere wenigstens drei Magneten, vorzugsweise wenigstens sechs Magneten, umfasst. Bevorzugt kann die Haltevorrichtung 5 wenigstens zwei Magneten, insbesondere lediglich zwei Magneten, umfassen. Der wenigstens eine Magnet ist zum Halten der Spielbegrenzung-Distanzscheibe 1 an der Kugelgelenkzugöse 6 geeignet. Der Magnet weist dazu die notwendige Stärke auf, um bei einem Kupplungsvorgang an der Kugelgelenkzugöse 6 zu halten. Dadurch kann die Spielbegrenzung-Distanzscheibe 1 besonders einfach an der Kugelgelenkzugöse 6 gehalten werden, wobei die Form der Kugelgelenkzugöse 6 nicht besonders berücksichtigt werden muss. Dadurch können Beschädigungen der Haltevorrichtung 5 durch bei einem Kupplungsvorgang einwirkende Scherkräfte, welche Scherkräfte beispielsweise bei einer Zapfenverbindung zu einem Abbrechen der Zapfen führen könnten, reduziert werden. Weiters kann insbesondere bei der Ausbildungsform mit mehreren Magneten besonders einfach ein Verdrehen der Spielbegrenzung-Distanzscheibe 1 an der Kugelgelenkzugöse 6 bei einem Kupplungsvorgang verhindert werden. Dabei hat sich gezeigt, dass die Verwendung von zwei Magneten bereits ausreicht, um einem Verdrehen der Spielbegrenzung-Distanzscheibe 1 effektiv entgegenzuwirken. In Fig. 7 ist beispielhaft eine bevorzugte Ausführungsform der Spielbegrenzung-Distanzscheibe 1 mit drei Haltevorrichtungen 5, insbesondere Magneten, gezeigt, wobei in Fig. 8 eine Spielbegrenzung-Distanzscheibe 1 mit zwei Haltevorrichtungen 5, insbesondere Magneten, gezeigt ist.

Bevorzugt ist das Loch 3 der Spielbegrenzung-Distanzscheibe 1 kreisförmig.

Bevorzugt kann der Durchmesser 7 des Lochs 3 der Spielbegrenzung-Distanzscheibe 1 mindestens 25 mm, insbesondere mindestens 30 mm, vorzugsweise mindestens 35 mm, sein. Der Durchmesser 7 des Lochs 3 ist in Fig. 7 beispielhaft gezeigt.

Das Loch 3 der Spielbegrenzung-Distanzscheibe 1 ist derart ausgebildet, dass der Kupplungsbolzen 4 in dem Loch 3 aufgenommen werden kann.

Bevorzugt kann der Durchmesser 9 der Spielbegrenzung-Distanzscheibe 1 mindestens 50 mm, insbesondere mindestens 55 mm, vorzugsweise mindestens 60 mm, sein. Der Durchmesser 9 der Spielbegrenzung-Distanzscheibe 1 ist der Außendurchmesser der Spielbegrenzung-Distanzscheibe 1 und ist in Fig. 7 beispielhaft gezeigt.

Bevorzugt kann die Spielbegrenzung-Distanzscheibe 1 mindestens 4 mm, insbesondere mindestens 6 mm, vorzugsweise mindestens 8 mm, dick sein.

Bevorzugt kann die Spielbegrenzung-Distanzscheibe 1 eine im Wesentlichen scheibenförmige Erhebung 19 aufweisen. Eine bevorzugte Ausführungsform der Spielbegrenzung-Distanzscheibe 1 mit der scheibenförmigen Erhebung 19 ist beispielhaft in den Fig. 7 und 8 gezeigt. Dadurch kann eine Beschädigung an der Kugelgelenkzugöse 6, insbesondere an der Zugstange 21 der Kugelgelenkzugöse 6, bei einem maximalen vertikalen Schwenkwinkel besonders effektiv reduziert bzw. verhindert werden. Eine im gekuppelten Zustand befindliche Anhängerkupplung 2, welche einen positiven maximalen Schwenkwinkel aufweist und wobei zwei Spielbegrenzung-Distanzscheiben 1 mit scheibenförmigen Erhebungen 19 an der Kugelgelenkzugöse 6 befestigt sind, ist beispielhaft in der Fig. 4 ersichtlich. Wie in Fig. 4 ersichtlich ist, kann durch die scheibenförmigen Erhebungen 19 besonders einfach ein unmittelbarer Kontakt zwischen der Kugelgelenkzugöse 6, insbesondere der Zugstange 21 der Kugelgelenkzugöse 6, und dem Zugmaul 8 verhindert werden, sodass während des Betriebs der Anhängerkupplung 2 eine Beschädigung der Kugelgelenkzugöse 6 und des Zugmauls 8 reduziert bzw. vermieden werden kann.

Bevorzugt kann die scheibenförmige Erhebung 19 im Wesentlichen stufenförmig ausgebildet sein. Die im Wesentlichen stufenförmige Ausbildung ist beispielhaft in Fig. 4 ersichtlich.

Bevorzugt ist der Außendurchmesser 20 der scheibenförmigen Erhebung 19 kleiner als der Durchmesser 9 der Spielbegrenzung-Distanzscheibe 1. Bevorzugt entspricht der Durchmesser 7 des Lochs 3 im Wesentlichen dem Innendurchmesser der scheibenförmigen Erhebung 19. In Fig. 7 ist der Außendurchmesser 20 der scheibenförmigen Erhebung 18 beispielhaft gezeigt. Wie in Fig. 7 ersichtlich ist, entspricht in der gezeigten bevorzugten Ausführungsform der Spielbegrenzung-Distanzscheibe 1 der Durchmesser 7 des Lochs 3 dem Innendurchmesser der scheibenförmigen Erhebung 19.

Bevorzugt kann Spielbegrenzung-Distanzscheibe 1 eine Zugstangenkontaktfläche 22 aufweisen. Bevorzugt ist die Zugstangenkontaktfläche 22 an der die scheibenförmigen Erhebung 19 aufweisenden Seite der Spielbegrenzung-Distanzscheibe 1 angeordnet. Die Zugstangenkontaktfläche 22 ist beispielhaft in den Fig. 7 und 8 gezeigt.

Bevorzugt kann die Zugstangenkontaktfläche 22 von der scheibenförmigen Erhebung 19 ausgehend weg erstrecken, und insbesondere von der scheibenförmigen Erhebung 19 ausgehend abfallend ausgebildet sein. Die ist beispielhaft in den Fig. 4 gezeigt. Bevorzugt kann dabei die Zugstangenkontaktfläche 22 von der scheibenförmigen Erhebung 19 ausgehend in Richtung der Außenkante 23 der Spielbegrenzung-Distanzscheibe 1 abfallend ausgebildet sein. Die Außenkante 23 erstreckt sich dabei um dem Umfang der Spielbegrenzung-Distanzscheibe 1 und ist beispielhaft in Fig. 8 gezeigt. Dadurch kann besonders einfach ein möglichst großer Schwenkwinkel für die Kugelgelenkzugöse 6 sichergestellt sowie gleichzeitig einer Beschädigung an der Kugelgelenkzugöse 6, insbesondere an der Zugstange 21 der Kugelgelenkzugöse 6 effektiv entgegengewirkt oder verhindert werden.

Bevorzugt kann die scheibenförmige Erhebung 19 an der der Zugstangenkontaktfläche 22 zugewandten Seite einen Rücksprung aufweisen. Dadurch kann die Form der Spielbegrenzung-Distanzscheibe 1 noch besser an die Schwenkbewegung der Kugelgelenkzugöse, insbesondere an die Zugstange 21 der Kugelgelenkzugöse 6, angepasst werden.

Weiters ist eine Kugelgelenkzugöse 6 mit wenigstens einer Spielbegrenzung-Distanzscheibe 1 vorgesehen. In den Fig. 1 bis 5 sind bevorzugte Ausführungsformen der Kugelgelenkzugöse 6 gezeigt, wobei jeweils zwei Spielbegrenzung-Distanzscheiben 1 an der Kugelgelenkzugöse 6 mittels jeweils einer Haltevorrichtung 5 gehalten sind. Wie in den Fig. 1 bis 5 beispielhaft gezeigt ist, entspricht der jeweilige Durchmesser 7 des Lochs 3 der zwei Spielbegrenzung-Distanzscheiben 1 mindestens dem Durchmesser des Lochs der Kugelgelenkzugöse 6, sodass ein gemeinsames Durchgangsloch für den Kupplungsbolzen 4 ausgebildet ist.

Das Durchgangsloch wird bei der Anhängerkupplung 2 zum Kuppeln der Kugelgelenkzugöse 6 und dem Zugmaul 8 mittels des Kupplungsbolzens 4 verwendet.

Besonders bevorzugt kann vorgesehen sein, dass der Durchmesser 7 des Lochs 3 der wenigstens einen Spielbegrenzung-Distanzscheibe 1 mindestens 5 Prozent, insbesondere mindestens 10 Prozent, vorzugsweise mindestens 15 Prozent, größer als der Durchmesser des Lochs der Kugelgelenkzugöse 6 ist. Dadurch kann der vertikale Schwenkbereich bei einer Kupplung mit einem Zugmaul zusätzlich erhöht werden, da eine Verschiebung der an der Kugelgelenkzugöse 6 befestigten Spielbegrenzung-Distanzscheibe 1 erreicht werden kann. Dies ist in den Fig. 5 und 6 beispielhaft gezeigt.

Der maximale positive vertikale Schwenkwinkel der Kugelgelenkzugöse 6, in einem mit dem Zugmaul 8 gekuppelten Zustand, ist beispielhaft mit dem Winkel α in Fig. 4 gezeigt. Fig. 4 zeigt dabei die erste Schwenkendlage der Anhängerkupplung 2. Dabei ist der Winkel α der Winkel zwischen einer Tangente 14, welche entlang der Längserstreckung der Kugelgelenkzugöse 6 verläuft, und einer Tangente 15, welche senkrecht zur Längserstreckung des Kupplungsbolzen 4 verläuft. Im Gegensatz dazu ist in Fig. 5 der maximale negative vertikale Schwenkwinkel der Kugelgelenkzugöse 6 in einem mit dem Zugmaul 8 gekuppelten Zustand beispielhaft gezeigt. Fig. 5 zeigt dabei die zweite Schwenkendlage der Anhängerkupplung 2.

Die Kugelgelenkzugöse 6 ist eine Zugöse mit einem Kugelgelenk, sodass positive und negative vertikale Schwenkungen eines an einer Zugmaschine gekuppelten Anhängers, beispielsweise bei Durchfahrt durch Gräben, erreicht werden können. Die Kugelgelenkzugöse 6 umfasst die Zugstange 21, wobei an einem Ende der Zugstange 21 das Kugelgelenk angeordnet ist. Dabei ist in dem Loch der Zugöse eine Kugel 10 mit einem Loch angeordnet, welche Kugel 10 austauschbar sein kann. Eine derartige Kugelgelenkzugöse 6 ist ein bekanntes Bauteil aus dem Stand der Technik. Das Loch der Kugelgelenkzugöse 6 ist das Loch, welches für den Kupplungsbolzen 4 des Zugmauls 8 zur Verfügung steht. Der Durchmesser des Lochs der Kugelgelenkzugöse 6 ist dabei also der Durchmesser des Lochs der Kugel 10.

Bevorzugt ist ein dem Kugelgelenk gegenüberliegendes Ende der Zugstange 21 mit einer Befestigungsplatte 24 der Kugelgelenkzugöse 6 verbunden. Bevorzugt ist die Befestigungsplatte 24 zum Befestigen der Kugelgelenkzugöse 6 an einem Fahrzeuganhänger ausgebildet. Dazu kann die Befestigungsplatte 24 bevorzugt Befestigungslöcher 25 zur Aufnahme von Befestigungsmittel, wie beispielsweise Schrauben oder Bolzen, aufweisen. Die Befestigungsplatte 24 ist in den Fig. 1 bis 5, sowie sind die Befestigungslöcher 25 in den Fig. 1 und 2 beispielhaft gezeigt. Die Verwendung der Befestigungsplatte 24 zum Befestigen der Kugelgelenkzugöse 6 an einen Fahrzeuganhänger ist jedoch nicht zwingend notwendig, da die Kugelgelenkzugöse 6 auch mittels anderer Befestigungsarten, wie beispielsweise Schweißen, an dem Fahrzeuganhänger befestigbar ist.

In Fig. 6 ist ein Detail 11 aus Fig. 5 gezeigt. Dabei ist ersichtlich, dass der Durchmesser der Kugel 10 kleiner ist, als der Durchmesser 7 des Lochs 3 der Spielbegrenzung-Distanzscheibe 1. Dabei kann erreicht werden, dass durch die Schwenkbewegung der Kugelgelenkzugöse 6 die Spielbegrenzung-Distanzscheibe 1 verschoben wird, sodass ein Abstand 13 zwischen der Innenseite der Spielbegrenzung-Distanzscheibe 1 und dem Kupplungsbolzen 4 ausgebildet wird. Dadurch kann erreicht werden, dass der maximale negative Schwenkwinkel vergrößert werden kann, weil sich die Spielbegrenzung-Distanzscheibe 1 verschieben, insbesondere in das Zugmaul 8 hinein verschieben, kann. In gleicher Weise führt dies auch zu einer Vergrößerung des maximalen positiven Schwenkwinkels. Auch wenn die Ausbildung des Abstands 13 lediglich in der bevorzugten Ausführungsform der Spielbegrenzung-Distanzscheibe 1 gezeigt ist, welche in den Fig. 5 und 6 ersichtlich ist, kann jede bevorzugte Ausführungsform der Kugelgelenkzugöse 6 und/oder der Anhängerkupplung 2 eine Spielbegrenzung-Distanzscheibe 1 mit einem kleineren Durchmesser der Kugel 10 als den Durchmesser 7 des Lochs 3 der Spielbegrenzung-Distanzscheibe 1 aufweisen.

Bevorzugt kann der Abstand 13 mindestens 2 mm, vorzugsweise mindestens 3 mm, betragen.

Bevorzugt ist das Loch der Kugelgelenkzugöse 6 geringfügig größer als der Durchmesser des Kupplungsbolzen 4, sodass der Kupplungsbolzen 4 ohne größere Anstrengung und Beschädigungen an der Kugelgelenkzugöse 6 in das Loch der Kugelgelenkzugöse 6 eingebracht werden kann.

Für Kugelgelenkzugösen 6 ist für zumindest manche Länder in Normen der mindestens aufzuweisende Schwenkbereich geregelt. Dabei muss beispielweise an der Anhängerkupplung 2 ein mindestens möglicher negativer und positiver vertikaler Maximalschwenkwinkel der Kugelgelenkzugöse 6 von 15 Grad möglich sein.

Besonders bevorzugt kann vorgesehen sein, dass jeweils eine Spielbegrenzung-Distanzscheibe 1 an einer Seite des Lochs der Kugelgelenkzugöse 6 angeordnet ist, wobei die zwei Spielbegrenzung-Distanzscheiben 1 und das Loch der Kugelgelenkzugöse 6 - bei Befestigung der Spielbegrenzung-Distanzscheibe 1 an der Kugelgelenkzugöse 6 - das gemeinsame Durchgangsloch ausbilden. Dadurch kann der Höhenschlag und damit auch der Verschleiß an der Anhängerkupplung 2 besonders gut reduziert werden, wobei das Kuppeln der Kugelgelenkzugöse 6 mit den zwei Spielbegrenzung-Distanzscheibe 1 nicht zusätzlich erschwert wird. In Fig. 1 ist eine erste bevorzugte Ausführungsform der Anhängerkupplung 2 in Explosivdarstellung gezeigt, wobei das gemeinsame Durchgangsloch besonders gut ersichtlich ist.

In Fig. 2 ist die in Fig. 1 gezeigte Ausführungsform der Anhängerkupplung 2 in einem gekuppelten Zustand in axonometrischer Ansicht gezeigt. Wie in Fig. 1 und Fig. 2 ersichtlich ist, kann die Anhängerkupplung 2 bevorzugt ein Sicherungselement 18 zum Sichern des Kupplungsbolzens 4 umfassen. Mittels des Sicherungselements 18 kann der Kupplungsbolzen 4 besonders einfach gegenüber einem ungewollten Lösen gesichert werden. Dabei zeigt Fig. 2 die Anhängerkupplung 2 in einem gekuppelten Zustand, wobei der Kupplungsbolzen 4 mittels des Sicherungselements 18 gesichert ist.

Bevorzugt kann das Sicherungselement 18 ein Sicherungssplint sein.

Der Kupplungsbolzen 4 ist Teil der Anhängerkupplung 2. Als Kupplungsbolzen 4 kann jeder Bolzen verwendet werden, welcher sich zum Kuppeln der Kugelgelenkzugöse 6 mit dem Zugmaul 8 eignet und die notwendigen mechanischen Beanspruchungen aushält.

Bevorzugt können auch mehrere Spielbegrenzung-Distanzscheiben 1 übereinander gestapelt an der Kugelgelenkzugöse 6 mittels der Haltevorrichtung 5 angeordnet werden. Die einzelnen Spielbegrenzung-Distanzscheibe 1 halten dabei durch die jeweiligen Haltevorrichtungen 5 aneinander.

Bevorzugt können jeweils zwei Spielbegrenzung-Distanzscheiben 1 übereinander gestapelt an einer Seite des Lochs der Kugelgelenkzugöse 6 angeordnet sein.

Zur Kupplung der Kugelgelenkzugöse 6 mit dem Zugmaul 8 werden bevorzugt zuerst an die Kugelgelenkzugöse 6 eine oder mehrere Spielbegrenzung-Distanzscheiben 1 angeordnet. Dabei können beispielsweise eine Spielbegrenzung-Distanzscheibe 1 an einer ersten Lochseite der Kugelgelenkzugöse 6 und eine zweite Spielbegrenzung-Distanzscheibe 1 an einer zweiten Lochseite der Kugelgelenkzugöse 6 angeordnet werden. Anschließend wird die Kugelgelenkzugöse 6 mit den zwei Spielbegrenzung-Distanzscheiben 1 in das Zugmaul 8 eingebracht und mittels des Kupplunsgbolzens 4 miteinander gekuppelt.

Beim Einbringen der Kugelgelenkzugöse 6 in das Zugmaul 8 kann bevorzugt auch ein maulschlüsselförmiges Hilfswerkzeug verwendet werden. Dadurch kann nach dem Einbringen der Kugelgelenkszugöse 6 in das Zugmaul 8 ein nachträgliches Positionieren der Spielbegrenzung-Distanzscheibe 1 an der Kugelgelenkszugöse 6 mittels dem maulschlüsselförmigen Hilfswerkzeug durchgeführt werden. Dies kann insofern dann hilfreich sein, wenn die Spielbegrenzung-Distanzscheibe 1 durch das Einführen der Kugelgelenkszugöse 6 in das Zugmaul 8 verrutscht. Dadurch können gefährliche Handverletzungen bei einem Kuppeln der Kugelgelenkzugöse 6 mit dem Kupplungsbolzen 4 verhindert werden, indem ein Ausrichten der an der Kugelgelenkzugöse 6 befestigten Spielbegrenzung-Distanzscheibe 1 einfach und präzise mit dem maulschlüsselförmiges Hilfswerkzeug erfolgen kann, beispielsweise wenn das Loch 3 der Spielbegrenzung-Distanzscheibe 1 nicht fluchtend mit dem Loch der Kugelgelenkzugöse 6 übereinstimmt. Die Maulweite des maulschlüsselförmiges Hilfswerkzeug ist dazu an den Durchmesser 9 der Spielbegrenzung-Distanzscheibe 1 angepasst.

Bevorzugt kann das maulschlüsselförmige Hilfswerkzeug auch eine Scheibenhalterungsvorrichtung aufweisen, welche die Lage der in dem Maul des maulschlüsselförmiges Hilfswerkzeug aufgenommen Spielbegrenzung-Distanzscheibe 1 sichert. Dies kann beispielsweise mittels einer Nut in dem Maul des maulschlüsselförmigen Hilfswerkzeugs, mittels wenigstens einen Magneten oder mittels speziell ausgebildeter Fortsätze ausgebildet sein.

Bevorzugt kann das maulschlüsselförmige Hilfswerkzeug auch in den Rücksprung der scheibenförmigen Erhebung 19 eingreifen. Durch den Rücksprung kann bevorzugt eine umlaufende Nut an der Erhebung 19 ausgebildet sein, in welche Nut Schenkel des maulschlüsselförmige Hilfswerkzeug eingebracht werden können und durch welche Schenkel die Spielbegrenzungs-Distanzscheibe 1 an dem maulschlüsselförmigen Hilfswerkzeug gehalten oder eingeklemmt werden kann. Dadurch kann die Spielbegrenzungs-Distanzscheibe 1 besonders leicht positioniert werden.

Bevorzugt kann das maulschlüsselförmige Hilfswerkzeug plattenförmig ausgebildet sein. Bevorzugt weist das maulschlüsselförmige Hilfswerkzeug eine Dicke von maximal 5 mm, insbesondere maximal 4 mm, vorzugsweise maximal 3 mm, auf.

Das Zugmaul 8 weist bevorzugt wenigstens ein Loch 26, insbesondere eine Bohrloch, zur Aufnahme des Kupplungsbolzens 4 auf. Das wenigstens eine Loch 26 des Zugmauls 8 ist dabei derart ausgebildet, dass der Kupplungsbolzen 4 in dem Loch des Zugmauls 8 formschlüssig aufgenommen werden kann. Das Loch 26 der Zugmauls 8 ist in Fig. 1 beispielhaft gezeigt.

Das Zugmaul 8 weist bevorzugt einen Aufnahmeraum 16 für die Kugelgelenkzugöse 6 auf. Bevorzugt ist der Aufnahmeraum 16 zwischen zwei Fortsätzen 17 des Zugmauls 8 angeordnet. Der Aufnahmeraum 16 ist dazu ausgebildet die Kugelgelenkzugöse 6 aufzunehmen. Dies ist beispielhaft in Fig. 1 und 3 gezeigt. Das Zugmaul 8 ist ein bekanntes Bauteil aus dem Stand der Technik.

Bevorzugt ist das Zugmaul 8 und/oder der Kupplungsbolzen 4 aus Metall ausgebildet.

Die Höhe des Zugmauls 8, also der Bereich in dem die Kugelgelenkzugöse 6 zum Kuppeln eingeführt wird, ist in Normen festgelegt. Beispielsweise kann die Höhe des Zugmauls 8 mindestens 91 mm betragen. Beispielsweise kann ein Spiel 12 von mindestens 2 mm, insbesondere mindestens 3 mm, ausgebildet sein, wenn eine Kugelgelenkzugöse 6 mit jeweils einer an einer Lochseite der Kugelgelenkzugöse 6 angeordneten Spielbegrenzung-Distanzscheibe 1 in das Zugmaul 8 eingebracht und mit dem Zugmaul 8 gekuppelt ist. Dies ist beispielhaft in Fig. 5 ersichtlich.

Das wenigstens eine Loch 26 des Zugmauls 8, das Loch 3 der wenigstens einen Spielbegrenzung-Distanzscheibe 1 und das Loch der Kugelgelenkzugöse 6 bilden ein Durchgangsloch aus, in welches Durchgangsloch der Kupplungsbolzen 4 gesteckt werden kann, wodurch der gekuppelte Zustand der Anhängekupplung 2 ausgebildet wird.

Der gekuppelte Zustand der Anhängerkupplung 2 ist der Zustand bei der die Kugelgelenkzugöse 6 mit der wenigstens einen Spielbegrenzung-Distanzscheibe 1 mittels des Kupplungsbolzens 4 an das Zugmaul 8 gekuppelt ist.

Bevorzugt kann das Zugmaul 8 zwei Löcher, insbesondere Bohrlöcher, zur Aufnahme des Kupplungsbolzens 4 aufweisen. Dies ist beispielhaft der Fig. 5 entnehmbar.

Nachfolgend werden Grundsätze für das Verständnis und die Auslegung gegenständlicher Offenbarung angeführt.

Unter der Einheit Tonne ist die metrische Tonne zu verstehen.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

Bei Wertebereichen sind die Endpunkte mitumfasst, sofern es sich aus dem Kontext nicht anders ergibt.

## Patentansprüche

1. Spielbegrenzung-Distanzscheibe (1) für eine Anhängerkupplung (2), umfassend ein Loch (3) zur Aufnahme eines Kupplungsbolzens (4) und eine Haltevorrichtung (5) zum Halten an einer Kugelgelenkzugöse (6).

2. Spielbegrenzung-Distanzscheibe (1) nach Anspruch 1, **dadurch gekennzeichnet, dass** die Haltevorrichtung (5) wenigstens einen Magneten, insbesondere wenigstens drei Magneten, vorzugsweise wenigstens sechs Magneten, umfasst.

3. Spielbegrenzung-Distanzscheibe (1) nach Anspruch 1 oder 2, **dadurch gekennzeichnet, dass** die Spielbegrenzung-Distanzscheibe (1) umfassend Metall ausgebildet ist.

4. Kugelgelenkzugöse (6) mit wenigstens einer Spielbegrenzung-Distanzscheibe (1) nach einem der Ansprüche 1 bis 3, **dadurch gekennzeichnet, dass** der Durchmesser (7) des Lochs (3) der wenigstens einen Spielbegrenzung-Distanzscheibe (1) mindestens dem Durchmesser des Lochs der Kugelgelenkzugöse (6) entspricht, und dass das Loch (3) der wenigstens einen Spielbegrenzung-Distanzscheibe (1) und das Loch der Kugelgelenkzugöse (6) - bei Befestigung der Spielbegrenzung-Distanzscheibe (1) an der Kugelgelenkzugöse (6) - ein gemeinsames Durchgangsloch ausbilden.

5. Kugelgelenkzugöse (6) nach Anspruch 4, **dadurch gekennzeichnet, dass** der Durchmesser (7) des Lochs (3) der wenigstens einen Spielbegrenzung-Distanzscheibe (1) mindestens 5 Prozent, insbesondere mindestens 10 Prozent, vorzugsweise mindestens 15 Prozent, größer als der Durchmesser des Lochs der Kugelgelenkzugöse (6) ist.

6. Kugelgelenkzugöse (6) nach Anspruch 4 oder 5, **dadurch gekennzeichnet, dass** jeweils eine Spielbegrenzung-Distanzscheibe (1) an einer Seite des Lochs der Kugelgelenkzugöse (6) angeordnet ist, wobei die zwei Spielbegrenzung-Distanzscheiben (1) und das Loch der Kugelgelenkzugöse (6) - bei Befestigung der Spielbegrenzung-Distanzscheibe (1) an der Kugelgelenkzugöse (6) - das gemeinsame Durchgangsloch ausbilden.

7. Anhängerkupplung (2) umfassend ein Zugmaul (8), einen Kupplungsbolzen (4) und eine Kugelgelenkzugöse (6) nach einem der Ansprüche 4 bis 6, **dadurch gekennzeichnet, dass** die Kugelgelenkzugöse (6) mit dem Zugmaul (8) mittels des Kupplungsbolzens (4) gekuppelt ist, wobei der Kupplungsbolzen (4) in dem gemeinsamen Durchgangsloch angeordnet ist.
